# EUROPEAN PATENT APPLICATION

(11) **EP 4 286 724 A1**
(43) Date of publication of application: **06.12.2023**
(21) Application number: 22177209.8
(22) Date of filing: 03.06.2022
(51) Int. Cl.: F16L 11/12

(54) **VACUUM HOSE**

(71) Applicant: Rick Spaansen Holding B.V., 1733 AN Nieuwe Niedorp (NL)
(72) Inventor: SPAANSEN, Rick, Nieuwe Niedorp (NL)
(74) Representative: van Breda, Jacobus

(57) **Abstract**

A vacuum hose (1) comprising a tube (2) defining a closable channel (3) through the tube (2), wherein the tube (2) is comprised within an external cover tube (4) and the ex-ternal cover tube (4) is connected to the tube (2) with a connection portion (5) which is pressurizable so as to arrange that when the connection portion (5) is pressurized the external cover tube (4) expands outwardly and causes the closable channel (3) of the tube (2) to open or to remain open.

## Description

The invention relates to a vacuum hose comprising a tube defining a closable channel through the tube. The tube has a certain degree of flexibility and compressibility which is required to make storing of the vacuum hose easy and limit the required amount of space for storing.

The known vacuum hose is used to absorb substances or material. Because of the suction that is applied to the vacuum hose the tube tends to close which deteriorates its functionality for picking up substances and material. To counter this problem the prior art applies either tubes of limited flexibility and compressibility, or alternatively to reinforce the tube with metal rings or spirals. A disadvantage is then that the known vacuum hose has increased weight, is bulkier, is less flexible and compressible, and is difficult or impossible to flatten to restrict storage room for the vacuum hose.

DE 34 29 892, FR 2.326.229 and US 3.110.922 each disclose a vacuum hose comprising a tube defining a closable channel through the tube, wherein the tube is comprised within an external cover tube and that the external cover tube is connected to the tube with a connection portion which is pressurizable so as to arrange that when the connection portion is pressurized the external cover tube expands outwardly and causes the closable channel of the tube to open or to remain open.

GB 2 273 469 and EP 2 862 493 disclose subject-matter that is unrelated or distant from the invention.

It is an object of the invention to provide a vacuum hose which has low weight, which can be easily flattened to restrict storage room, and which is relatively flexible and compressible.

The vacuum hose of the invention has the features of one or more of the appended claims.

According to a first aspect of the invention the connection portion comprises a compressible and expandable honeycomb structure.

This may be embodied such that the connection portion comprises a spongelike structure.

An advantage of the vacuum hose of the invention is that when leakages occur in either the tube with the closable channel, or the external cover tube, this will be immediately apparent by closing of the channel within the tube. This also avoids spoiling of the environment. In addition to the further advantage that the vacuum hose of invention saves space, a major advantage is also that the vacuum hose of the invention is easier to use (especially with larger diameters) .

The invention will hereinafter be further elucidated with reference to the drawing of an exemplary embodiment of a vacuum hose according to the invention that is not limiting as to the appended claims.

In the drawing:
- figure 1 shows effective hose according the invention in a partly cut out isometric view; and

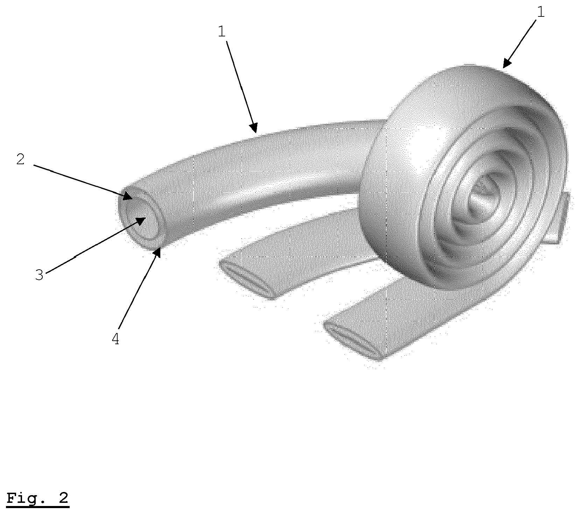

- figure 2 shows the vacuum hose according to the invention in a usable state and in a wound up state for storage.

Whenever in the figures the same reference numerals are applied, these numerals refer to the same parts.

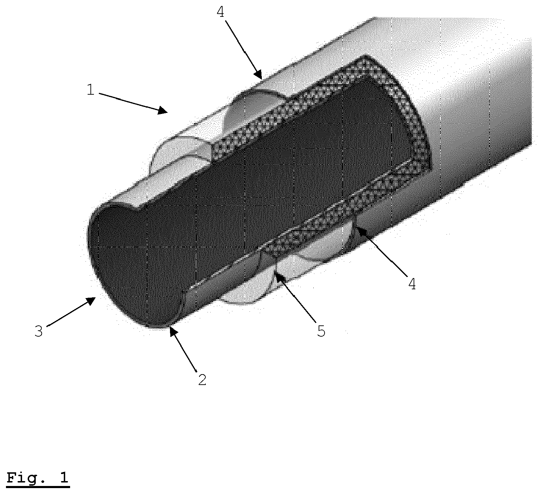

The figures show a vacuum hose 1 comprising a tube 2 defining a closable channel 3 through the tube 2. As is best shown in figure 1 the tube 2 is comprised within an external cover tube 4 and the external cover tube 4 is connected to the tube 2 with a connection portion 5 which is pressurizable so as to arrange that when the connection portion 5 is pressurized the external cover tube 4 expands outwardly and causes the closable channel 3 of the tube 2 to open or to remain open.

In the shown embodiment the connection portion 5 comprises a compressible and expandable honeycomb structure. This conference is be embodied as a spongelike structure.

In an alternative which is not shown in the figures, which is clear for the skilled person, the connection portion 5 may be embodied with a spiralling hose between and connecting the tube 2 and the external cover tube 4.

Although the invention has been discussed in the foregoing with reference to an exemplary embodiment of the vacuum hose of the invention, the invention is not restricted to this particular embodiment which can be varied in many ways without departing from the invention. The discussed exemplary embodiment shall therefore not be used to construe the append-ed claims strictly in accordance therewith. On the contrary the embodiment is merely intended to explain the wording of the appended claims without intent to limit the claims to this exemplary embodiment. The scope of protection of the invention shall therefore be construed in accordance with the appended claims only, wherein a possible ambiguity in the wording of the claims shall be resolved using this exemplary embodiment.

## Claims

1. A vacuum hose (1) comprising a tube (2) defining a closable channel (3) through the tube (2), which tube (2) is comprised within an external cover tube (4) and that the external cover tube (4) is connected to the tube (2) with a connection portion (5) which is pressurizable so as to arrange that when the connection portion (5) is pressurized the external cover tube (4) expands outwardly and causes the closable channel (3) of the tube (2) to open or to remain open, **characterized in that** the connection portion (5) comprises a compressible and expandable honeycomb structure.

2. The vacuum hose according to claim 1, **characterized in that** the connection portion (5) comprises a sponge-like structure.
